(19) Europäisches Patentamt
European Patent Office
Office européen des brevets

(11) Veröffentlichungsnummer: **0 174 541**
**B1**

(12) # EUROPÄISCHE PATENTSCHRIFT

(45) Veröffentlichungstag der Patentschrift: 28.03.90

(51) Int. Cl.[5]: **G 02 F 1/133**, C 09 K 19/02

(21) Anmeldenummer: **85110650.0**

(22) Anmeldetag: **24.08.85**

(54) **Elektrooptisches Anzeigeelement.**

(30) Priorität: **11.09.84 DE 3433248**

(43) Veröffentlichungstag der Anmeldung: **19.03.86 Patentblatt 86/12**

(45) Bekanntmachung des Hinweises auf die Patenterteilung: **28.03.90 Patentblatt 90/13**

(84) Benannte Vertragsstaaten: **CH DE FR GB LI NL**

(56) Entgegenhaltungen:
**GB-A- 2 080 561**
**US-A- 4 043 640**
**MOLECULAR CRYSTALS AND LIQUID CRYSTALS, vol. 63, no. 1-4,1981, Seiten 45-58. G. BAUR "The Influence of Material andDevice parameters on the Optical Characteristics of Liquid Crystal Displays"**
**PROCEEDING OF THE 3rd INTERNATIONAL DISPLAY RESEARCH CONFERENCE "Japan Display 83", 1983, Seiten 224-227. B.S. SCHEUBLE, G. BAUR "Nematic Liquid Crystals with Small Ratios of Bend/Splay Elastic Constants K3/K1"**
**IEEE TRANSACTIONS ON ELECTRON DEVICES, vol. ED-25, no. 9, September 1978, M.Schadt, F. MüLLER "Physical Properties of New Liquid-Crystal Mixtures and Electrooptical Performance in Twisted Nematic Displays" Seiten 1125-1137**
**ZEITSCHRIFT FüR NATURFORSCHUNG, Zeil A, Band 37a, Heft 2, Februar 1982 M. SCHADT, P.R. GERBER "Class Specific Physical Properties of Liquid Crystals and Correlations with Molecular Structure and Static Electrooptical Performance in Twist Cells", Seiten 165-178**

(73) Patentinhaber: **MERCK PATENT GESELLSCHAFT MIT BESCHRÄNKTER HAFTUNG**
**Frankfurter Strasse 250 Postfach 4119**
**D-6100 Darmstadt (DE)**

(72) Erfinder: **Scheuble, Bernhard, Dr.**
**Am Grenzweg 18**
**D-6146 Alsbach (DE)**
Erfinder: **Baur, Günter, Dr.**
**Waldhofstrasse 8**
**D-7800 Freiburg (DE)**
Erfinder: **Fehrenbach, Waltraut**
**Kleiststrasse 8**
**D-7830 Emmendingen (DE)**

**EP 0 174 541 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft ein elektrooptisches Anzeigeelement mit einer sehr geringen Blickwinkelabhängigkeit des Kontrastes und einer besonders steilen elektrooptischen Kennlinie.

Für Flüssigkristall-Anzeigeelemente werden die Eigenschaften nematischer oder nematisch-cholesterischer flüssigkristalliner Materialien ausgenutzt, ihre optischen Eigenschaften wie Lichtdurchlässigkeit, Lichtstreuung, Doppelbrechung, Reflexionsvermögen oder Farbe unter dem Einfluß elektrischer Felder signifikant zu verändern. Die Funktion derartiger Anzeigeelemente beruht dabei beispielsweise auf den Phänomenen der dynamischen Streuung, der Deformation aufgerichteter Phasen oder dem Schadt-Helfrich-Effekt in der verdrillten Zelle.

Unter diesen gebräuchlichen Typen von Flüssigkristall-Anzeigeelementen haben in letzter Zeit insbesondere die auf der Basis der verdrillten nematischen Zelle (TN-Zelle) besondere Bedeutung erlangt, weil sie mit relativ niedrigen Steuerspannungen betrieben werden können, die auch von kleinen Batterien unschwer zur Verfügung gestellt werden können. Weiterhin können diese Anzeigeelemente bisher am besten als Matrix-Anzeigeelemente gebaut werden, die Darstellung hoher Informationsdichte ohne eine unvertretbar große Anzahl von Ansteuerungs-, Zu- und Ableitungen ermöglichen.

In der praktischen Anwendung gibt es jedoch bei der TN-Zelle, insbesondere in der Form von Matrix-Anzeigeelementen, noch beträchtliche Schwierigkeiten. Dazu gehören vor allem die mehr oder weniger ausgeprägte Blickwinkelabhängigkeit des Kontrastes und die eingeschränkte Multiplexierbarkeit.

Für beide Probleme sind in der Literatur bereits Lösungsvorschläge zu finden, die zum Teil in die Praxis umgesetzt worden sind. So kann z. B. durch geeignete Wahl von Brechungsindexanisotropie $\Delta n$ und Zellendicke d die Blickwinkelabhängigkeit des Kontrastes eine TN-Zelle signifikant verbessert werden. [L. Pohl, G. Weber, R. Eidenschink, G. Baur and W. Fehrenbach, Appl. Phys. Lett. 38 (1981) 497].

Insbesondere im sogenannten ersten Transmissionsminimum nach Gooch und Tarry [C. H. Gooch and H. A. Tarry, J. Phys. D8 (1975) 1575] ergibt sich eine minimale Blickwinkelabhängigkeit des Kontrastes. Hierfür muß die Bedingung

$$d \cdot \Delta n = \frac{\lambda \cdot \sqrt{3}}{2}$$

erfüllt sein ($\lambda$ = Wellenlänge des benutzten Lichtes). Die Multiplexierbarkeit einer TN-Zelle wird bestimmt durch die Flüssigkristallparameter $K_1$, $K_2$, $K_3$ (elastische Konstanten für die Spreizung, Verdrehung, Biegung), durch die Dielektrizitätskonstanten $\varepsilon_\perp$ und $\varepsilon_\parallel$ und durch die Brechungsindizes $n_0$ und $n_e$, sowie durch Zellparameter wie z. B. Twistwinkel und Tiltwinkel an der Substratoberfläche. Der Einfluß dieser Material- und Zellenparameter wurde bereits von mehreren Autoren untersucht [D. W. Berreman J. Appl. Phys. 46 (1975) 3746 ; F. Gharadjedaghi and J. Robert, Rev. Phys. Appl. 11 (1976) 467 ; G. Baur, in « The Physics and Chemistry of Liquid Crystal Devices » (ed. by G. J. Sprokel) Plenum, New York, (1981) pp. 61 ; G. Baur, Mol. Crystl. Liq. Cryst. 63 (1981) 45 ; C. Z. van Doorn, C. J. Gerritsma and J. J. M. J. de Klerk, in « The Physics and Chemistry of Liquid Crystal Devices » (ed. by G. J. Sprokel) Plenum, New York, (1980), pp. 95 ; F. J. Kahn and H. Birecki, in « The Physics and Chemistry of Liquid Crystal Devices » (ed. by G. J. Sprokel) Plenum, New York, (1980a), (1980b), pp. 125].

Nach einer Näherungsformel wird die Multiplexierbarkeit abgeschätzt durch

$$p = 0.133 + 0.0266\,(K_3/K_1 - 1) + 0.433\ \ln\left(\frac{d \cdot \Delta n}{2\lambda}\right)^2$$

[M. Schadt and P. R. Gerber, Zeitschrift Naturforsch. 37a (1982) 165].

Je kleiner p desto höher ist die Multiplexierbarkeit. Nach dieser Abschätzung geht nur das Verhältnis $K_3/K_1$ und $\Delta n \cdot d$ in die Steilheit der elektrooptischen Kennlinie und damit die Multiplexierbarkeit ein. Das Verhältnis $K_2/K_1$ und $(\varepsilon_\parallel - \varepsilon_\perp)/\varepsilon_\perp = \Delta\varepsilon/\varepsilon_\perp$ wird vernachlässigt.

Experimentelle Untersuchungen von TN-Zellen mit bisher überwiegend verwendeten Flüssigkristallmaterialien haben ergeben, daß die Steilheit der elektrooptischen Kennlinie im zweiten Transmissionsminimum besser ist als im ersten Minimum, wohingegen die Blickwinkelabhängigkeit im ersten Minimum besser ist als im zweiten Transmissionsminimum.

Mit den bisher bekannten Lösungsvorschlägen können zwar die bei der Konstruktion und der Anwendung von TN-Zellen auftretenden wichtigsten Schwierigkeiten einzeln, jedoch nicht gleichzeitig gelöst werden.

Der Erfindung liegt die Aufgabe zugrunde, elektrooptische Anzeigeelemente zur Verfügung zu stellen, bei denen sowohl eine minimale Blickwinkelabhängigkeit als auch gleichzeitig eine möglichst steile elektrooptische Kennlinie durch Betrieb der Anzeigeelemente im ersten Transmissionsminimum nach Gooch und Tarry gewährleistet ist.

Es wurde nun gefunden, daß es bei geeigneter Wahl der Flüssigkristallparameter überraschenderweise möglich wird, sowohl eine minimale Blickwinkelabhängigkeit als auch gleichzeitig eine steile elektrooptische Kennlinie durch Betrieb der Anzeigeelemente im ersten Transmissionsminimum zu erzielen.

Gegenstand der Erfindung ist somit ein elektrooptisches Anzeigeelement auf der Basis einer verdrillten nematischen Zelle, bestehend aus Polarisatoren, Elektrodengrundplatten und Elektroden mit einer solchen Oberflächenbehandlung, daß die Vorzugsorientierung der jeweils angrenzenden Flüssigkristall-Moleküle der zwischen den Platten befindlichen flüssigkristallinen Phase von der einen zur anderen Elektrode gegeneinander verdreht ist, wobei die Werte für die Zellendicke d und die Brechungsindexanisotropie Δn der flüssigkristallinen Phase so gewählt werden, daß die Bedingung

$$d \cdot \Delta n = \frac{\lambda \cdot \sqrt{3}}{2}$$

gilt (λ = Wellenlänge für maximale Empfindlichkeit des menschlichen Auges), dadurch gekennzeichnet, daß

(a) die Flüssigkristallparameter $K_3/K_1$ und $\Delta\varepsilon/\varepsilon_\perp$ so eingestellt sind, daß gilt $K_3/K_1$ 0.8 bis 0.2 und $\Delta\varepsilon/\varepsilon_\perp$ 0.1 bis 0.3 und

(b) die flüssigkristalline Phase mindestens 30 Gewichtsprozent eines Gemisches aus drei bis 15 flüssigkristallinen Verbindungen enthält, die jeweils ein Strukturelement (I)

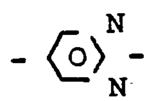 (I)

und zusätzlich eine 1,4-Phenylengruppe enthalten.

Der Aufbau des erfindungsgemäßen Flüssigkristallanzeigeelementes aus Polarisatoren, Elektrodengrundplatten und Elektroden mit einer solchen Oberflächenbehandlung, daß die Vorzugsorientierung der jeweils daran angrenzenden Flüssigkristall-Moleküle von der einen zur anderen Elektrode gewöhnlich um 90° gegeneinander verdreht ist, entspricht der für derartige Anzeigeelemente üblichen Bauweise. Dabei ist der Begriff der üblichen Bauweise hier weit gefaßt und umfaßt auch alle literaturbekannten Abwandlungen und Modifikationen der verdrillten nematischen Zelle, insbesondere auch Matrix-Anzeigeelemente sowie die zusätzlich Magnete enthaltenden Anzeigeelemente nach der DE-OS 2 748 738. Ein wesentlicher Unterschied der erfindungsgemäßen Anzeigeelemente zu den bisher üblichen auf der Basis der verdrillten nematischen Zelle besteht jedoch in der Wahl der Flüssigkristallparameter der Flüssigkristallschicht. Während beispielsweise das Verhältnis $K_3/K_1$ bei den üblichen flüssigkristallinen Phasen für derartige Anzeigeelemente $> 0{,}8$ ist und das Verhältnis $\Delta\varepsilon/\varepsilon_\perp$ normalerweise zwischen 1,2 und 1,7 liegt, ist das Verhältnis $K_3/K_1$ bei den erfindungsgemäßen Anzeigeelementen $\leqq 0{,}8$. In den erfindungsgemäßen Anzeigeelementen werden flüssigkristalline Phasen eingesetzt, bei denen die Flüssigkristallparameter $K_3/K_1$ und $\Delta\varepsilon/\varepsilon_\perp$ so gewählt werden, daß sowohl eine minimale Blickwinkelabhängigkeit als auch gleichzeitig eine möglichst steile elektrooptische Kennlinie durch Betrieb der Anzeigeelemente im ersten Transmissionsminimum gewährleistet ist.

Fig. 1 ist eine schematische Zeichnung, die veranschaulicht, welche Wertepaare der Parameter $K_3/K_1$ und $\Delta\varepsilon/\varepsilon_\perp$ gewählt werden können (unterhalb des schraffierten Bereichs) damit die elektrooptische Kennlinie im ersten Transmissionsminimum steiler ist als im zweiten.

Oberhalb des schraffierten Bereiches ist die elektrooptische Kennlinie im zweiten Transmissionsminimum steiler als im ersten Minimum ($V_{50}/V_{10}$ (1. Minimum) $>$ $V_{50}/V_{10}$ (2. Minimum)). Vorzugsweise werden Wertepaare der Parameter $K_3/K_1$ und $\Delta\varepsilon/\varepsilon_\perp$ gewählt, die unterhalb des schraffierten Bereiches in Fig. 1 liegen. Elektrooptische Anzeigeelemente, deren elektrooptische Kennlinie im ersten Transmissionsminimum steiler ist als im zweiten Transmissionsminimum, sind somit bevorzugt. Besonders bevorzugte Parameterkombinationen sind $K_3/K_1 \leqq 0{,}4$ und $\Delta\varepsilon/\varepsilon_\perp \leqq 0{,}3$. Der in Fig. 1 eingezeichnete schraffierte Bereich stellt die Grenze dar, bei der die Steilheit der elektrooptischen Kennlinie im ersten Minimum gleich der im zweiten Minimum ist. Wird $K_3/K_1$ und/oder $\Delta\varepsilon/\varepsilon_\perp$ kleiner, dann ist die Steilheit im ersten Minimum besser als im zweiten Minimum.

Es wird ein möglichst kleines Verhältnis $K_3/K_1$ gewählt, also 0.8 bis 0.2, insbesondere 0.7 bis 0.3. Je kleiner der Wert für $K_3/K_1$ gewählt wird, desto größer kann $\Delta\varepsilon/\varepsilon_\perp$ für erfindungsgemäße Anzeigeelemente sein und desto günstiger wird die Schwellenspannung. Um eine günstige Schwellenspannung zu erzielen wird somit $\Delta\varepsilon/\varepsilon_\perp \geqq 0.1$ gewählt.

Die Dicke der Flüssigkristallschicht des erfindungsgemäßen Anzeigeelements und/oder die optische Anisotropie Δn des Flüssigkristallmaterials werden so gewählt, daß gilt,

$$d \cdot \Delta n = \frac{\lambda}{2} \cdot \sqrt{3}$$

wobei für die Wellenlänge λ der üblicherweise für die maximale Empfindlichkeit des menschlichen Auges verwendete Wert 550 nm eingesetzt wird. Die Schichtdicken der erfindungsgemäßen Anzeigeelemente können beispielsweise im Bereich von 2 bis 10 µm liegen. Vorzugsweise werden möglichst geringe

Schichtdicken gewählt, wobei die Untergrenze für d durch die geforderten Qualitätsnormen der Massenproduktion bestimmt wird. Ein besonders bevorzugter Bereich für d ist somit 3 bis 8 μm, insbesondere 4 bis 7 μm.

Flüssigkristalline Dielektrika, deren Materialparameter in den erfindungsgemäßen Bereichen liegen, können aus üblichen flüssigkristallinen Basismaterialien hergestellt werden. Aus der Literatur sind zahlreiche derartige Materialien bekannt. Die für die erfindungsgemäßen Anzeigeelemente verwendeten Dielektrika enthalten mindestens 30, insbesondere mindestens 95 Gewichtsprozent eines Gemisches aus drei bis 15, insbesondere vier bis zehn flüssigkristallinen Verbindungen, die jeweils mindestens das Strukturelement I enthalten.

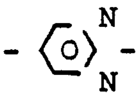

(I)

Diese Flüssigkristallverbindungen enthalten zusätzlich eine 1,4-Phenylengruppe. Geeignete Materialien sind beispielsweise beschrieben in DE-OS 22 57 588, 23 06 738, 20 17 727, 23 21 632, EP-OS 0 126 883, USP 3,997,536, 4,062,798, 4,462,923, 4,389,329, 4,364,838, 4,066,570, 4,452,718, 4,419,262, 4,510,069, JP-OS 144,770/84, 144,771/84, 144,772/84, 83,961/83, D. Demus et al., Flüssige Kristalle in Tabellen, VEB Deutscher Verlag für Grundstoffindustrie, Leipzig 1979 und D. Demus et al., Flüssige Kristalle in Tabellen II, VEB Deutscher Verlag für Grundstoffindustrie, Leipzig 1984.

Derartige Dielektrika können zusätzlich Farb- und/oder Dotierstoffe in den gebräuchlichen Mengen enthalten, wenn dadurch die Flüssigkristallparameter nicht aus den erfindungsgemäßen Bereichen geführt werden.

Die folgenden Beispiele sollen die Erfindung erläutern, ohne sie zu begrenzen. Wenn nichts anderes angegeben ist, bedeuten Angaben von Prozent Gewichtsprozent. Alle Temperaturangaben bedeuten Grad Celsius.

Beispiel 1

Eine TN-Zelle mit einer flüssigkristallinen Phase bestehend aus
15 % 2-p-Methoxyphenyl-5-hexylpyrimidin,
15 % 2-p-Pentoxyphenyl-5-hexylpyrimidin,
15 % 2-p-Heptoxyphenyl-5-hexylpyrimidin,
13 % 2-p-Nonoxyphenyl-5-hexylpyrimidin,
15 % 2-p-Methoxyphenyl-5-heptylpyrimidin,
15 % 2-p-Heptoxyphenyl-5-heptylpyrimidin,
12 % 2-p-Nonoxyphenyl-5-heptylpyrimidin.
(Klärpunkt 53°) zeigt eine dielektrische Anisotropie $\Delta\varepsilon$ von +0,9, ein $\varepsilon_{\|}$ von 4,0, ein $\varepsilon_{\perp}$ von 3,1, ein $\Delta\varepsilon/\varepsilon_{\perp}$ von 0,29, eine optische Anisotropie $\Delta n$ von 0,168 und ein $K_3/K_1$ von 0,40. Der Anstellwinkel $\alpha_0$ an der Glasoberfläche ist 0,5°. Eine derartige TN-zelle zeigt bei Betrieb im 1. Minimum (d. h. $d \cdot \Delta n = 0{,}48$) eine Steilheit der elektrooptischen Kennlinie von 1,11 ($V_{50}/V_{10}$), während bei Betrieb im 2. Minimum die Steilheit schlechter ist ($V_{50}/V_{10} = 1{,}12$).

Beispiel 2

Eine TN-Zelle mit einer flüssigkristallinen Phase bestehend aus
14 % 2-p-Methoxyphenyl-5-hexylpyrimidin,
14 % 2-p-Pentoxyphenyl-5-hexylpyrimidin,
14 % 2-p-Heptoxyphenyl-5-hexylpyrimidin,
13 % 2-p-Nonoxyphenyl-5-hexylpyrimidin,
14 % 2-p-Methoxyphenyl-5-heptylpyrimidin,
14 % 2-p-Heptoxyphenyl-5-heptylpyrimidin,
12 % 2-p-Nonoxyphenyl-5-heptylpyrimidin und
5 % r-1-Cyan-cis-4-(trans-4-butylcyclohexyl)-1-heptylcyclohexan
(Klärpunkt 55°) zeigt eine dielektrische Anisotropie $\Delta\varepsilon$ von +0,5, eine $\Delta\varepsilon/\varepsilon_{\perp}$ von 0,14 und ein $K_3/K_1$ von 0,42. Diese Zelle hat bei Betrieb im 1. Minimum eine Steilheit $V_{50}/V_{10}$ von 1.08, während $V_{50}/V_{10}$ im 2. Minimum 1.095 ist. Die Steilheit der Kennlinie ist somit im 1. Minimum wesentlich besser.

**Patentansprüche**

1. Elektrooptisches Anzeigeelement auf der Basis einer verdrillten nematischen Zelle, bestehend aus Polarisatoren, Elektrodengrundplatten und Elektroden mit einer solchen Oberflächenbehandlung, daß die Vorzugsorientierung der jeweils angrenzenden Flüssigkristall-Moleküle der zwischen den Platten

befindlichen flüssigkristallinen Phase von der einen zur anderen Elektrode gegeneinander verdreht ist, wobei die Werte für die Zellendicke d und die Brechungsindexanisotropie $\Delta n$ der flüssigkristallinen Phase so gewählt werden, daß die Bedingung

$$d \cdot \Delta n = \frac{\lambda \cdot \sqrt{3}}{2}$$

gilt ($\lambda$ = Wellenlänge für maximale Empfindlichkeit des menschlichen Auges), dadurch gekennzeichnet, daß

a) die Flüssigkristallparameter $K_3/K_1$ und $\Delta\varepsilon/\varepsilon_\perp$ so eingestellt sind, daß gilt $K_3/K_1$ 0.8 bis 0.2 und $\Delta\varepsilon/\varepsilon_\perp$ 0.1 bis 0.3 und

b) die flüssigkristalline Phase mindestens 30 Gewichtsprozent eines Gemisches aus drei bis 15 flüssigkristallinen Verbindungen enthält, die jeweils ein Strukturelement (I)

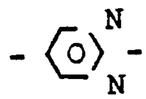

(I)

und zusätzlich eine 1,4-Phenylengruppe enthalten.

2. Anzeigeelement nach Anspruch 1, dadurch gekennzeichnet, daß die Zellendicke d 3 bis 8 µm beträgt.

3. Anzeigeelement nach Anspruch 1, dadurch gekennzeichnet, daß die Flüssigkristallparameter so eingestellt sind, daß gilt

$$K_3/K_1 \leqq 0.4 .$$

## Claims

1. Electro-optical display element based on a twisted nematic cell, consisting of polarizers, electrode base plates and electrodes with such a surface treatment that the preferential orientation of the particular adjoining liquid crystal molecules of the liquid-crystalline phase located between the plates is twisted from one electrode to the other, the values of the cell thickness d and the refractive index anisotropy $\Delta n$ of the liquid-crystalline phase being selected such that the condition

$$d \cdot \Delta n = \frac{\lambda \cdot \sqrt{3}}{2}$$

is met ($\lambda$ = wavelength of the maximum sensitivity of the human eye), characterized in that

a) the liquid crystal parameters $K_3/K_1$ and $\Delta\varepsilon/\varepsilon_\perp$ are adjusted such that $K_3/K_1$ is 0.8 to 0.2 and $\Delta\varepsilon/\varepsilon_\perp$ is 0.1 to 0.3, and

b) the liquid-crystalline phase contains at least 30 percent by weight of a mixture of three to 15 liquid-crystalline compounds which each contain a structural element (I)

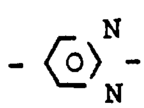

(I)

and additionally a 1,4-phenylene group.

2. Display element according to Claim 1, characterized in that the cell thickness d is 3 to 8 µm.

3. Display element according to Claim 1, characterized in that the liquid crystal parameters are adjusted such that

$$K_3/K_1 \leq 0.4$$

## Revendications

1. Elément d'affichage électro-optique à base d'une cellule nématique torsadée, consistant en polarisateurs, plaques de support d'électrodes et électrodes ayant subi un traitement de surface tel que l'orientation préférentielle des molécules de cristaux liquides, contiguës dans chaque cas, de la phase à

cristaux liquides qui se trouve entre les plaques, est en opposition d'une électrode à l'autre, les valeurs de l'épaisseur de cellule (d) et de l'anisotropie de l'indice de réfraction $\Delta n$ de la phase à cristaux liquides étant choisies de manière à satisfaire à la condition

$$d \cdot \Delta n = \frac{\lambda \cdot \sqrt{3}}{2}$$

dans laquelle $\lambda$ = longueur d'onde pour la sensibilité maximale de l'œil humain, caractérisé en ce que :

a) les paramètres des cristaux liquides $K_3/K_1$ et $\Delta\varepsilon/\varepsilon_\perp$ sont réglés de manière que $K_3/K_1$ aille de 0,8 à 0,2 et $\Delta\varepsilon/\varepsilon_\perp$ aille de 0,1 à 0,3, et

b) la phase à cristaux liquides contient au moins 30 % en poids d'un mélange de trois à quinze composés à cristaux liquides contenant chacun un élément de structure I

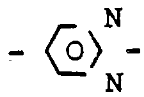

(I)

et en outre un groupe 1,4-phénylène.

2. Elément d'affichage selon la revendication 1, caractérisé en ce que l'épaisseur de cellule (d) est de 3 à 8 µm.

3. Elément d'affichage selon la revendication 1, caractérisé en ce que les paramètres des cristaux liquides sont réglés de manière que

$$K_3/K_1 \leqq 0,4 .$$

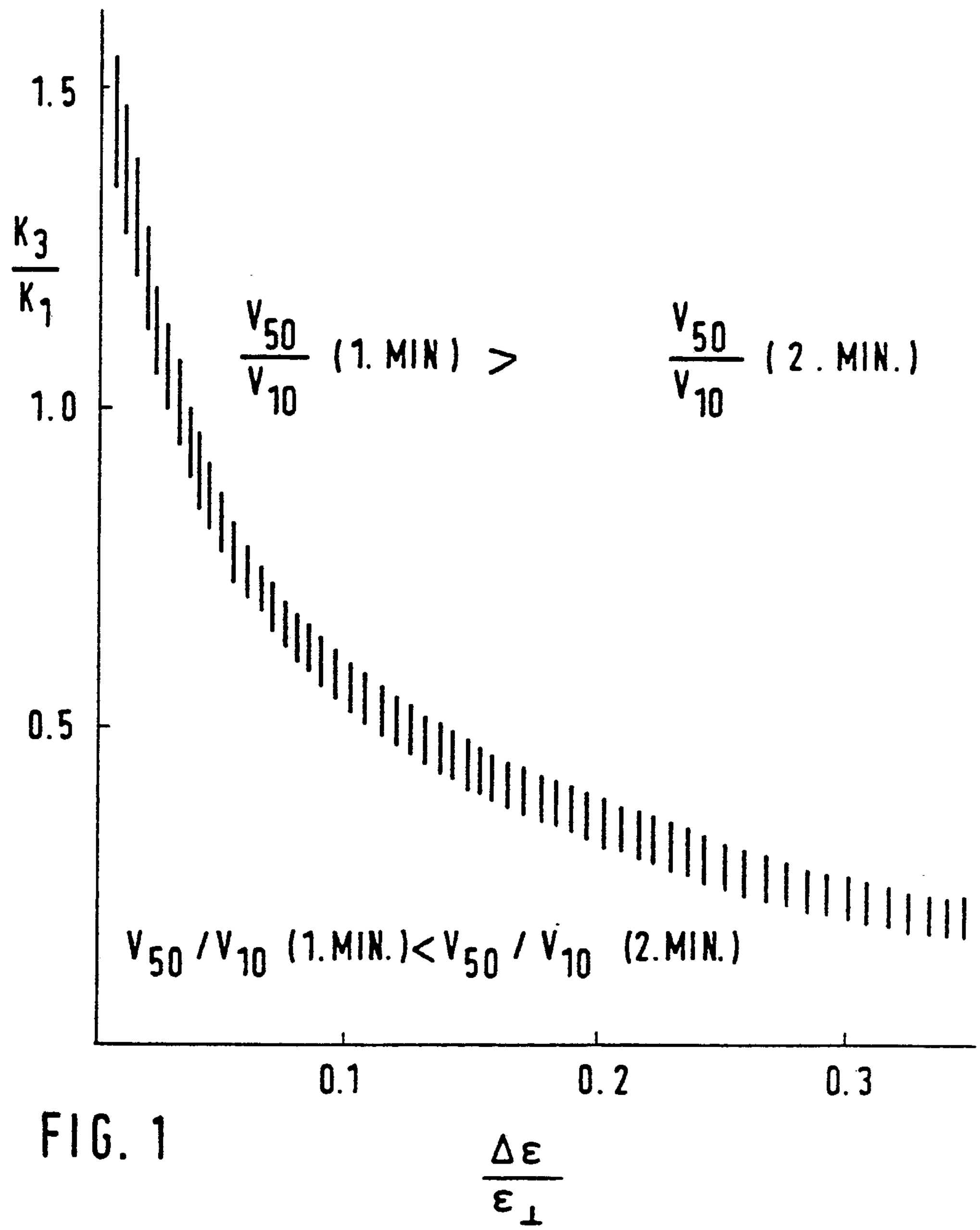
1.5
1.0
0.5
$\frac{K_3}{K_1}$
$\frac{V_{50}}{V_{10}}$ (1. MIN) > $\frac{V_{50}}{V_{10}}$ (2. MIN.)
$V_{50} / V_{10}$ (1. MIN.) < $V_{50} / V_{10}$ (2. MIN.)
0.1
0.2
0.3
$\frac{\Delta\varepsilon}{\varepsilon_\perp}$

FIG. 1